# FASCICULE DE BREVET EUROPEEN

(11) **EP 3 222 975 B1**
(45) Date de publication et mention de la délivrance du brevet: **12.09.2018**
(21) Numéro de dépôt: 16162293.1
(22) Date de dépôt: 24.03.2016
(51) Int. Cl.: G01D 5/20

(54) **CIRCUIT DE DÉTECTION POUR CAPTEUR INDUCTIF DE DÉPLACEMENT**
DETEKTIONSSCHALTKREIS FÜR INDUKTIVEN BEWEGUNGSSENSOR
DETECTION CIRCUIT FOR INDUCTIVE MOTION SENSOR

(43) Date de publication de la demande: 27.09.2017
(73) Titulaire: The Swatch Group Research and Development Ltd., 2074 Marin (CH)
(72) Inventeur: Gueissaz, François, 2075 Wavre (CH)
(74) Mandataire: Goulette, Ludivine

(56) Documents cités:
- EP-A2- 1 248 369
- EP-A2- 1 600 741
- DE-A1-102008 063 936
- US-A1- 2012 326 760

## Description

### Domaine de l'invention

L'invention se rapporte à un circuit de détection pour un capteur inductif de déplacement.

### Arrière-plan de l'invention

Un tel capteur est par exemple utilisé pour détecter une pression d'un nageur sur une plaque d'un système de chronométrage pour compétitions de natation, appelée plaque de touche. Une plaque de ce type est fixée au mur d'arrivée du bassin de natation, et une pression d'un nageur sur la plaque de touche provoque un rapprochement de la plaque par rapport au mur. Lorsque ce rapprochement est détecté par le capteur, le chronomètre mesurant le temps du nageur s'arrête ou enregistre un temps intermédiaire.

Les capteurs inductifs de déplacement comportent habituellement une bobine excitée par un courant alternatif à haute fréquence délivré par un circuit de détection. La proximité d'une pièce électriquement conductrice ou ferromagnétique avec la bobine induit une perte au sein du circuit magnétique formé par la bobine, la pièce et l'entrefer les séparant, ou/et modifie l'inductance de la bobine. La mesure de perte dans le circuit ou d'une variation de cette inductance permet donc d'identifier un déplacement de la pièce par rapport à la bobine.

L'inconvénient de ce type de circuit de détection est que du courant y est consommé en permanence. Il existe donc un besoin d'un circuit de détection de consommation moindre, permettant d'indiquer le dépassement d'une valeur seuil de perte dans le circuit magnétique ou de son inductance (valeur seuil correspondant par exemple à une pression d'un nageur sur une plaque de touche).

Le document DE 10 2008 063936 A1 divulgue un circuit de détection semblable.

### Résumé de l'invention

Le but de la présente invention est de répondre au besoin évoqué précédemment.

A cet effet, l'invention se rapporte à un circuit de détection d'une variation d'inductance du circuit magnétique d'un capteur inductif de déplacement, le circuit de détection comprenant :
- une première bascule agencée pour délivrer un premier signal comprenant une impulsion de tension de durée nécessaire et suffisante pour charger la bobine à un courant seuil, le premier signal étant appliqué à une première borne de la bobine
- un générateur d'impulsions configuré pour délivrer un signal de référence comprenant une impulsion de référence
- un générateur de signal d'horloge agencé pour déclencher périodiquement et simultanément l'impulsion de charge et l'impulsion de référence
- une deuxième bascule agencée pour générer un signal de sortie prenant l'état du premier signal sur le front de fin de l'impulsion de référence.

De manière connue, un capteur inductif, plus précisément à inductance variable, de déplacement comporte une partie ferromagnétique fixe intégrant une bobine. Lorsqu'une pièce ferromagnétique mobile par rapport à la partie fixe se trouve à proximité de la partie fixe, un circuit magnétique comprenant la partie fixe et la partie mobile en série avec un entrefer, se ferme. La réluctance 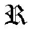 du circuit magnétique est égale à la somme des réluctances des segments formés par les pièces fixe (f), mobile (m), et de l'entrefer (e), soit L_{f}/µ₀µ_{f}S_{f} + Lₘ/µ₀µₘSₘ + Lₑ/µ₀Sₑ, où L représente la longueur du segment de circuit magnétique, µ sa perméabilité magnétique relative, S sa section, et µ₀ la perméabilité magnétique du vide. On comprend donc que la réluctance du circuit magnétique varie proportionnellement à la longueur de l'entrefer, c'est-à-dire à l'espacement entre la pièce mobile et la partie fixe. Plus l'entrefer est court, plus la réluctance du circuit magnétique est faible, et plus l'inductance de la bobine est élevée.

Selon l'invention, et contrairement à ce qui se pratique dans l'état de l'art, la bobine n'est pas excitée par un courant alternatif à haute fréquence, mais par un train d'impulsions de charge. Plus précisément, une tension électrique est périodiquement appliquée par une première bascule BD1 sur la bobine placée dans le circuit magnétique à réluctance variable. A l'instant de l'application de cette tension sur la bobine, le courant dans la bobine commence à croître avec une vitesse donnée par 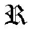 U/N², où 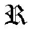 représente la réluctance du circuit magnétique, U la tension appliquée, et N le nombre de tours de la bobine.

Plus l'inductance est élevée, plus la durée de l'impulsion de charge nécessaire pour atteindre une valeur fixe de courant est grande, et inversement.

Le rapport cyclique des impulsions de charge est largement inférieur à 1% et permet d'obtenir un capteur à faible consommation énergétique. Chaque impulsion de charge représente une dépense énergétique inférieure au nanojoule, soit une consommation inférieure à 10 microwatts. La consommation d'un ensemble de capteurs sur une plaque de touche est donc limitée. De plus, en supposant que ces impulsions de charge soient répétées à une fréquence de plus de 10'000 Hertz, un capteur possédant un temps de latence inférieur à 100 microsecondes peut être obtenu.

La deuxième bascule BD2 agit comme un comparateur entre la durée de l'impulsion de référence et la durée de l'impulsion de charge. Si l'inductance est faible, l'impulsion de charge est terminée sur le front de fin de l'impulsion de référence. Au contraire, si l'inductance est élevée, l'impulsion de charge est toujours en cours sur le front de fin de l'impulsion de référence. Le circuit de détection permet donc de fournir un signal de sortie indiquant si l'inductance est supérieure à une valeur seuil.

En outre, le circuit de détection selon l'invention peut comprendre une ou plusieurs des caractéristiques ci-dessous, selon toutes les combinaisons techniquement possibles.

Dans un mode de réalisation non limitatif, le circuit de détection comprend un comparateur agencé et configuré pour délivrer un troisième signal changeant d'état lorsque le deuxième signal observé à une deuxième borne de la bobine dépasse un premier seuil de comparaison, la première bascule étant agencée de sorte que ledit changement d'état provoque la fin de l'impulsion de charge.

Dans un mode de réalisation non limitatif, la première bascule est une bascule comprenant :
- une première entrée asynchrone SET soumise au signal d'horloge
- une deuxième entrée asynchrone CLEAR soumise au troisième signal.

Dans un mode de réalisation non limitatif, le circuit de détection comprend une résistance branchée entre la deuxième borne de la bobine et la masse du circuit de détection.

Dans un mode de réalisation non limitatif, le comparateur est un trigger de Schmitt comportant une entrée soumise au deuxième signal.

Dans un mode de réalisation non limitatif, le générateur d'impulsions est agencé et configuré pour que l'un des états du signal de sortie provoque une diminution d'une durée initiale de l'impulsion de référence, et l'autre état provoque le retour de l'impulsion de référence à sa durée initiale.

Dans un mode de réalisation non limitatif, le générateur d'impulsions comprend :
- une première entrée asynchrone TRIG soumise au signal d'horloge
- une deuxième entrée soumise au signal de sortie.

Dans un mode de réalisation non limitatif, la deuxième bascule est une bascule D comprenant :
- une première entrée synchrone D soumise au premier signal
- une deuxième entrée CLK soumise au signal de référence (U4).

### Description sommaire des dessins

D'autres particularités et avantages ressortiront clairement de la description qui en est faite ci-après, à titre indicatif et nullement limitatif, en référence aux dessins annexés, dans lesquels :
- la figure 1 représente un circuit de détection d'une variation d'inductance d'une bobine, connecté aux bornes de ladite bobine
- la figure 2 montre un chronogramme représentant l'évolution temporelle de plusieurs signaux observés à différents points du circuit de détection.

### Description détaillée des modes de réalisation préférés

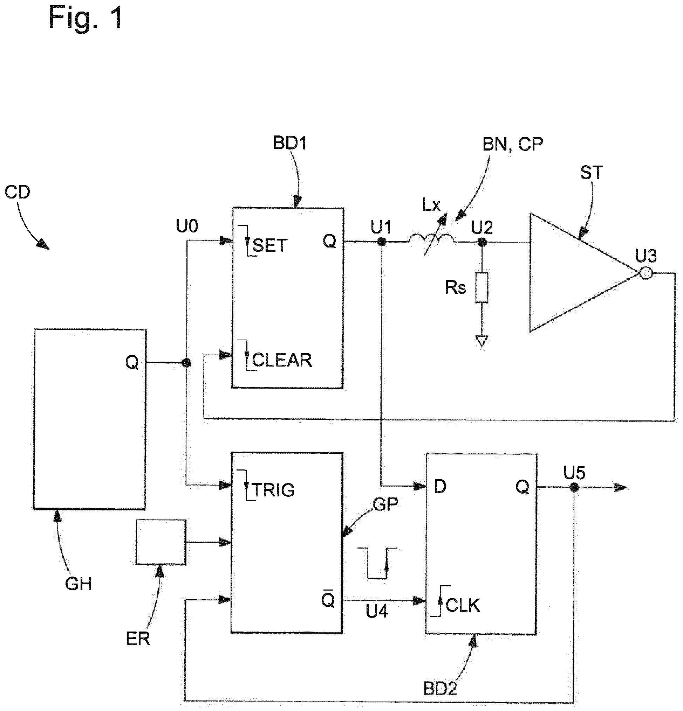

A la figure 1 est représenté le circuit de détection CD selon l'invention. Le circuit de détection CD est apte à générer un signal de sortie U5 binaire fonction de l'inductance Lx d'une bobine BN à inductance variable, ladite bobine BN faisant partie d'un capteur inductif de déplacement CP. Plus précisément, le circuit de détection CD est tel que le signal de sortie U5 prend une valeur haute si l'inductance Lx est supérieure à un premier seuil d'inductance Lon, et basse si l'inductance Lx est inférieure à un deuxième seuil d'inductance Lon-dL.

Le circuit de détection CD comporte un générateur de signal d'horloge GH, apte à générer un signal d'horloge U0. La fréquence du signal d'horloge U0 est choisie inverse au temps de latence souhaité du capteur. Par exemple, si l'on souhaite un capteur de latence 100 microsecondes, le signal d'horloge est choisi à la fréquence 10 kilohertz. En effet, comme cela est clarifié plus loin, chaque coup d'horloge du signal d'horloge U0 déclenche une interrogation du système qui mène potentiellement à la détection d'une variation de l'inductance Lx.

En outre, le circuit de détection CD comporte une première bascule référencée BD1 (par exemple, mais non nécessairement, une bascule D ou une bascule SR) apte à générer un premier signal U1 binaire fonction du signal d'horloge U0 et d'un troisième signal U3 binaire. Plus précisément, le signal d'horloge U0 est appliqué sur une première entrée asynchrone SET de la première bascule BD1, déclenchée par un front descendant, et le troisième signal U3 est appliqué sur une deuxième entrée asynchrone CLEAR de la première bascule BD1, elle aussi déclenchée par un front descendant. Ainsi, lorsque le signal d'horloge U0 passe à l'état bas, le premier signal U1 passe à l'état haut, démarrant l'impulsion de charge, et lorsque le troisième signal U3 passe à l'état bas, le premier signal U1 passe à l'état bas, terminant l'impulsion de charge. Une première borne de la bobine BN est soumise au premier signal U1.

Par ailleurs, le circuit de détection CD comporte une résistance Rs connectée entre la deuxième borne de la bobine BN et la masse du circuit de détection CD. Le signal observé sur la deuxième borne de la bobine BN est appelé deuxième signal U2. Le deuxième signal U2 représente la tension aux bornes de la résistance Rs, et est proportionnel au courant dans la bobine BN.

En outre, le circuit de détection CD comporte une bascule de Schmitt ST, aussi appelée bascule à seuil ou trigger de Schmitt, apte à générer le troisième signal U3 en fonction du deuxième signal U2. Plus précisément, la bascule de Schmitt ST compare le deuxième signal U2 avec un premier seuil de comparaison Se1 et un deuxième seuil de comparaison Se2. Lorsque le deuxième signal U2 devient supérieur au premier seuil de comparaison Se1, le troisième signal U3 passe à l'état bas et termine l'impulsion de charge en ré-initialisant le signal U1 à l'état bas via l'entrée asynchrone CLEAR; lorsque le deuxième signal U2 devient inférieur au deuxième seuil de comparaison Se2, le troisième signal U3 passe à l'état haut, sans effet sur le signal U1.

En outre, le circuit de détection CD comporte un générateur de pulses rectangulaires GP, apte à générer un signal de référence U4 comportant des impulsions de référence IP4, en fonction du signal d'horloge U0 et du signal de sortie U5. Plus précisément, le signal d'horloge U0 est appliqué sur une première entrée asynchrone TRIG du générateur GP, déclenchée par un front descendant, de sorte que lorsque le signal d'horloge U0 passe à l'état bas, le signal de référence U4 passe à l'état bas également, pour une durée prédéfinie de manière à former une impulsion de référence IP4. Comme cela est expliqué plus loin, le signal de sortie U5 est utilisé pour éventuellement modifier la durée des impulsions de référence IP4. Une durée initiale tpw4 prédéfinie en fonction d'un seuil de détection souhaité pour le capteur de déplacement CP, est affectée aux impulsions de référence IP4, mais cette durée des impulsions de référence IP4 est éventuellement raccourcie d'une durée dpw en fonction de l'état du signal de sortie U5. Plus précisément, si le signal de sortie U5 est à l'état bas sur un front descendant du signal d'horloge U0, les impulsions de référence IP4 sont de la durée initiale tpw4 prédéfinie. En revanche, si le signal de sortie U5 est à l'état haut sur un front descendant du signal d'horloge U0, les impulsions de référence IP4 sont de durée tpw4-dpw.

Afin de régler la durée tpw4, et ainsi le seuil de détection du capteur, le circuit de détection CD comprend un élément de réglage ER lié à une entrée du générateur d'impulsions GP. Il s'agit par exemple d'une résistance, d'une capacité variable ou encore d'une valeur de sortie d'un compteur numérique à programmer.

En outre, le circuit de détection CD comporte également une deuxième bascule référencée BD2, par exemple de type D, apte à générer le signal de sortie U5 en fonction du premier signal U1 et du signal de référence U4. Plus précisément, le premier signal U1 est appliqué sur l'entrée synchrone D de la deuxième bascule BD2, et le signal de référence U4 est appliqué sur l'entrée horloge CLK de la deuxième bascule BD2, opérant un échantillonnage de l'entrée D. Ainsi, sur le front montant du signal de référence U4, le signal de sortie U5 prend la valeur du premier signal U1, et lorsque le troisième signal U3 passe à l'état bas, le premier signal U1 passe à l'état bas également. Cette nouvelle valeur de U1 sur l'entrée D de BD2 sera visible sur U5 à la prochaine impulsion de référence IP4.

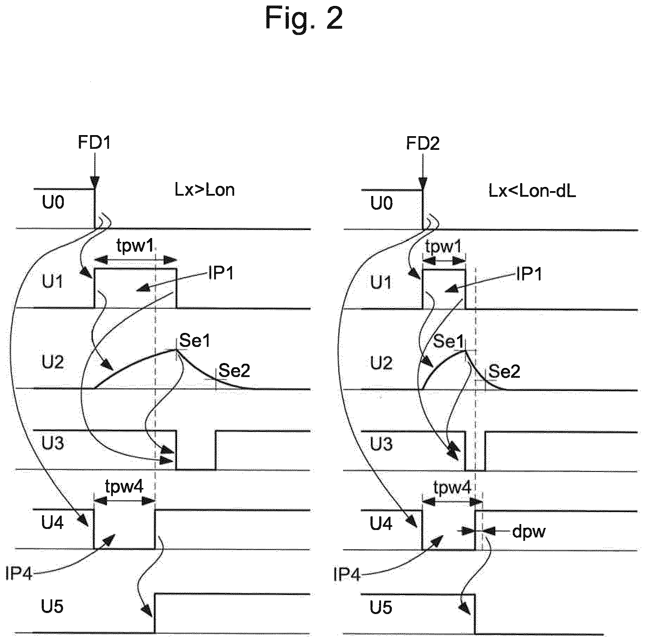

Afin d'aider à la compréhension du fonctionnement du circuit, les signaux U1 à U5 sont représentés temporellement sur la figure 2. Initialement, l'inductance Lx de la bobine BN est supérieure au premier seuil d'inductance Lon. Puis, entre un premier front descendant FD1 et un deuxième front descendant FD2 du signal d'horloge U0, l'inductance Lx de la bobine BN devient inférieure au deuxième seuil d'inductance Lon-dL. Nous supposons que le signal d'horloge U0 et le signal de référence U4 sont initialement à l'état haut, et que le premier signal U1 et le deuxième signal U2 sont initialement à l'état bas, le deuxième signal U2 imposant U3 à l'état haut. De plus, nous supposons que le signal de sortie U5 est initialement à l'état bas. Tous ces états initiaux peuvent être aisément imposés à l'enclenchement du dispositif de détection.

Sur le premier front descendant FD1 du signal d'horloge U0, le premier signal U1 passe de l'état bas à l'état haut. La bobine BN, alors soumise à un échelon de tension, se charge, et la tension aux bornes de la résistance Rs augmente, comme le montre le deuxième signal U2. Lorsque la tension aux bornes de la résistance Rs augmente et atteint le premier seuil de comparaison Se1, le troisième signal U3 passe de l'état haut à l'état bas. En passant à l'état bas, le troisième signal U3 déclenche le passage du premier signal U1 de l'état haut à l'état bas. La bobine BN se décharge alors, et la tension aux bornes de la résistance Rs diminue jusqu'à redevenir nulle, comme le montre le chronogramme représentant le deuxième signal U2. Lorsque la tension aux bornes de la résistance Rs diminue et atteint le deuxième seuil de comparaison Se2, le troisième signal U3 passe de l'état bas à l'état haut, sans effet sur le signal U1. Le premier signal U1 et le deuxième signal U2 reprennent alors leur valeur basse initiale, tandis que le troisième signal U3 reprend sa valeur haute initiale.

En parallèle, sur le premier front descendant FD1 du signal d'horloge U0, le signal de référence U4 passe de l'état haut à l'état bas, puis, après une durée tpw4, à nouveau de l'état bas à l'état haut. En passant à l'état haut, le signal de référence U4 déclenche la recopie du premier signal U1 sur le signal de sortie U5. Or, puisque l'inductance Lx de la bobine BN est initialement forte, le premier signal U1 est toujours à l'état haut lorsque le signal de référence U4 repasse à l'état haut après une durée tpw4. Autrement dit, la durée tpw1 de l'impulsion rectangulaire du premier signal U1 est plus grande que la durée tpw4 de l'impulsion rectangulaire du signal de référence U4. Ainsi, le signal de sortie U5 passe de l'état bas à l'état haut. Il est donc détecté une variation d'inductance. Si le capteur est associé à une plaque de touche, il est détecté qu'une pression a été exercée sur la plaque de touche.

Puis, le deuxième front d'horloge FD2 fait repasser le premier signal U1 de l'état bas à l'état haut. Or, entre temps, l'inductance Lx de la bobine BN est devenue inférieure au deuxième seuil d'inductance Lon-dL, la bobine BN est donc plus rapide à charger que précédemment. Ainsi, le premier signal U1 est déjà repassé à l'état bas lorsque le signal de référence U4 repasse à l'état haut après une durée tpw4-dpw (on rappelle qu'il a été mentionné précédemment que lorsque le signal de sortie U5 est à l'état haut sur un front descendant du signal d'horloge U0, les impulsions de référence sont de durée tpw4-dpw). Autrement dit, la durée tpw1 de l'impulsion rectangulaire du premier signal U1 est plus petite que la durée tpw4-dpw de l'impulsion rectangulaire du signal de référence U4. Le signal de sortie U5 passe alors de l'état haut à l'état bas.

On note que raccourcir la durée de l'impulsion de référence IP4 lorsque le signal de sortie U5 est à l'état haut permet d'assurer une stabilité de la tension de sortie U5 dans le cas où l'inductance Lx est supérieure au premier seuil d'inductance Lon, mais fluctue aléatoirement à cause du bruit électrique du circuit et aux vibrations mécaniques du capteur, de manière à dépasser par moments ce seuil Lon. Le raccourcissement de l'impulsion de référence IP4 permet d'éviter que la tension de sortie U5 repasse aléatoirement à l'état bas à cause de ces fluctuations.

## Revendications

1. Circuit de détection (CD) d'une variation d'inductance (Lx) du circuit magnétique d'un capteur inductif de déplacement (CP), le circuit de détection (CD) comprenant :
- une première bascule (BD1) agencée pour délivrer un premier signal (U1) comprenant une impulsion de tension (IP1) de durée (tpw1) nécessaire et suffisante pour charger la bobine (BN) à un courant seuil, le premier signal (U1) étant appliqué à une première borne de la bobine (BN)
- un générateur d'impulsions (GP) configuré pour délivrer un signal de référence (U4) comprenant une impulsion de référence (IP4)
- un générateur de signal d'horloge (GH) agencé pour déclencher périodiquement et simultanément l'impulsion de charge (IP1) et l'impulsion de référence (IP4)
- une deuxième bascule (BD2) agencée pour générer un signal de sortie (U5) prenant l'état du premier signal (U1) sur le front de fin de l'impulsion de référence (IP4).

2. Circuit de détection (CD) selon la revendication précédente, comprenant un comparateur (ST) agencé et configuré pour délivrer un troisième signal (U3) changeant d'état lorsque le deuxième signal (U2) observé à une deuxième borne de la bobine (BN) dépasse un premier seuil de comparaison (Se1), la première bascule (BD1) étant agencée de sorte que ledit changement d'état provoque la fin de l'impulsion de charge (IP1).

3. Circuit de détection (CD) selon la revendication 2, la première bascule (BD1) étant une bascule comprenant :
- une première entrée asynchrone SET soumise au signal d'horloge (U0)
- une deuxième entrée asynchrone CLEAR soumise au troisième signal (U3).

4. Circuit de détection (CD) selon l'une des revendications 2 à 3, comprenant une résistance (Rs) branchée entre la deuxième borne de la bobine (BN) et la masse du circuit de détection (CP).

5. Circuit de détection (CD) selon l'une des revendications 2 à 4, le comparateur (ST) étant un trigger de Schmitt comportant une entrée soumise au deuxième signal (U2).

6. Circuit de détection (CD) selon l'une des revendications précédentes, le générateur d'impulsions (GP) étant agencé et configuré pour que l'un des états du signal de sortie (U5) provoque une diminution d'une durée initiale (tpw4) de l'impulsion de référence (IP4), et l'autre état provoque le retour de l'impulsion de référence (IP4) à sa durée initiale (tpw4).

7. Circuit de détection (CD) selon la revendication précédente, le générateur d'impulsions (GP) comprenant :
- une première entrée asynchrone TRIG soumise au signal d'horloge (U0)
- une deuxième entrée soumise au signal de sortie (U5).

8. Circuit de détection (CD) selon l'une des revendications précédentes, la deuxième bascule (BD2) étant une bascule D comprenant :
- une première entrée synchrone D soumise au premier signal (U1)
- une deuxième entrée CLK soumise au signal de référence (U4).

## Patentansprüche

1. Schaltung (CD) zum Detektieren einer Veränderung der Induktivität (Lx) des Magnetkreises eines induktiven Verlagerungssensors (CP), wobei die Detektionsschaltung (CD) umfasst:
- ein erstes Flipflop (BD1), das dafür ausgelegt ist, ein erstes Signal (U1) zu liefern, umfassend einen Spannungsimpuls (IP1) mit einer Dauer (tpw1), die notwendig und ausreichend ist, um die Spule (BN) mit einem Schwellenstrom zu beaufschlagen, wobei das erste Signal (U1) an einen ersten Anschluss der Spule (BN) angelegt wird,
- einen Impulsgenerator (GP), der konfiguriert ist, ein Referenzsignal (U4) zu liefern, das einen Referenzimpuls (IP4) enthält,
- einen Taktsignalgenerator (GH), der dafür ausgelegt ist, periodisch und gleichzeitig den Ladeimpuls (IP1) und den Referenzimpuls (IP4) auszulösen,
- ein zweites Flipflop (BD2), das dafür ausgelegt ist, ein Ausgangssignal (U5) zu erzeugen, das den Zustand des ersten Signals (U1) an der hinteren Flanke des Referenzimpulses (IP4) annimmt.

2. Detektionsschaltung (CD) nach dem vorhergehenden Anspruch, umfassend einen Komparator (St), der dafür ausgelegt und konfiguriert ist, ein drittes Signal (U3) zu liefern, das den Zustand ändert, wenn das an einem zweiten Anschluss der Spule (BN) beobachtete zweite Signal (U2) einen ersten Vergleichsschwellenwert (Se1) überschreitet, wobei das erste Flipflop (BD1) so beschaffen ist, dass die Zustandsänderung das Ende des Ladungsimpulses (IP1) bewirkt.

3. Detektionsschaltung (CD) nach Anspruch 2, wobei das erste Flipflop (BD1) ein Flipflop ist, das umfasst:
- einen ersten asynchronen Eingang SET, an den das Taktsignal (U0) angelegt wird,
- einen zweiten asynchronen Eingang CLEAR, an den das dritte Signal (U3) angelegt wird.

4. Detektionsschaltung (CD) nach einem der Ansprüche 2 bis 3, umfassend einen Widerstand (Rs), der zwischen den zweiten Anschluss der Spule (BN) und die Masse der Detektionsschaltung (CD) geschaltet ist.

5. Detektionsschaltung (CD) nach einem der Ansprüche 2 bis 4, wobei der Komparator (SD) ein Schmitt-Trigger ist, der einen Eingang aufweist, an den das zweite Signal (U2) angelegt wird.

6. Detektionsschaltung (CD) nach einem der vorhergehenden Ansprüche, wobei der Impulsgenerator (GP) so ausgelegt und konfiguriert ist, dass einer der Zustände des Ausgangssignals (U5) eine Verringerung der usprünglichen Dauer (tpw4) des Referenzimpulses (IP4) bewirkt und der andere Zustand die Rückkehr des Referenzimpulses (IP4) zu seiner ursprünglichen Dauer (tpw4) bewirkt.

7. Detektionsschaltung (CD) nach dem vorhergehenden Anspruch, wobei der Impulsgenerator (GP) umfasst:
- einen ersten asynchronen Eingang (TRIG), an den das Taktsignal (U0) angelegt wird,
- einen zweiten Eingang, an den das Ausgangssignal (U5) angelegt wird.

8. Detektionsschaltung (CD) nach einem der vorhergehenden Ansprüche, wobei das zweite Flipflop (BD2) ein D-Flipflop ist, umfassend:
- einen ersten synchronen Eingang D, an den das erste Signal (U1) angelegt wird,
- einen zweiten Eingang CLK, an den das Referenzsignal (U4) angelegt wird.

## Claims

1. Circuit (CD) for detecting a variation in inductance (Lx) of the magnetic circuit of an inductive displacement sensor (CP), wherein the detector circuit (CD) comprises:
- a first flip flop (BD1) arranged to supply a first signal (U1) comprising a voltage pulse (IP1) of necessary and sufficient duration (tpw1) to charge the coil (BN) to a threshold current, wherein the first signal (U1) is applied to a first terminal of the coil (BN)
- a pulse generator (GP) configured to supply a reference signal (U4) comprising a reference pulse (IP4)
- a clock signal generator (GH) arranged to trigger the charge pulse (IP1) and the reference pulse (IP4) periodically and simultaneously
- a second flip flop (BD2) arranged to generate an output signal (U5) taking the status of the first signal (U1) on the trailing edge of the reference pulse (IP4).

2. Detector circuit (CD) according to the previous claim, comprising a comparator (ST) arranged and configured to supply a third signal (U3) that changes status when the second signal (U2) observed at a second terminal of the coil (BN) exceeds a first comparison threshold (Se1), the first flip flop (BD1) being arranged so that said change of status causes the termination of the charge pulse (IP1).

3. Detector circuit (CD) according to claim 2, wherein the first flip flop (BD1) is a flip flop comprising:
- a first asynchronous input SET subject to the clock signal (U0)
- a second asynchronous input CLEAR subject to the third signal (U3).

4. Detector circuit (CD) according to one of claims 2 to 3, comprising a resistor (Rs) branched between the second terminal of the coil (BN) and the earth of the detector circuit (CP).

5. Detector circuit (CD) according to one of claims 2 to 4, wherein the comparator (ST) is a Schmitt trigger having an input subject to the second signal (U2).

6. Detector circuit (CD) according to one of the preceding claims, wherein the pulse generator (GP) is arranged and configured so that one of the statuses of the output signal (U5) causes a reduction of an initial duration (tpw4) of the reference pulse (IP4) and the other status causes the reference pulse (IP4) to return to its initial duration (tpw4).

7. Detector circuit (CD) according to the previous claim, wherein the pulse generator (GP) comprises:
- a first asynchronous input TRIG subject to the clock pulse (U0)
- a second input subject to the output signal (U5).

8. Detector circuit (CD) according to one of the preceding claims, wherein the second flip flop (BD2) is a flip flop D comprising:
- a first synchronous input D subject to the first signal (U1 )
- a second input CLK subject to the reference signal (U4).
